# EUROPEAN PATENT APPLICATION

(11) **EP 3 587 373 A1**
(43) Date of publication of application: **01.01.2020**
(21) Application number: 18758322.4
(22) Date of filing: 22.02.2018
(51) Int. Cl.: C03C 27/12, B32B 5/18, B32B 17/10

(54) **HEAT INSULATING SHEET, INTERMEDIATE FILM FOR LAMINATED GLASS AND LAMINATED GLASS**

(30) Priority: 22.02.2017 JP 2017031099
(71) Applicant: Sekisui Chemical Co., Ltd., Osaka-shi, Osaka 530-0047 (JP)
(72) Inventor: YOSHIDA, Shougo, Koka-shi Shiga 528-8585 (JP); TAKAHASHI, Katsunori, Koka-shi Shiga 528-8585 (JP); OKANO, Moyuru, Koka-shi Shiga 528-8585 (JP); NAKAJIMA, Daisuke, Koka-shi Shiga 528-8585 (JP)
(74) Representative: Cabinet Beau de Loménie
(86) International application number: PCT/JP2018/006435
(87) International publication number: WO 2018/155551

(57) **Abstract**

The present invention aims to provide a heat insulation sheet having excellent heat insulation properties, and an interlayer film for a laminated glass and a laminated glass each including the heat insulation sheet. Provided is a heat insulation sheet including: a laminate including an aerogel layer containing an aerogel and a resin layer containing a thermoplastic resin, the resin layer being stacked on at least one surface of the aerogel layer.

## Description

### TECHNICAL FIELD

The present invention relates to a heat insulation sheet having excellent heat insulation properties, and an interlayer film for a laminated glass and a laminated glass each including the heat insulation sheet.

### BACKGROUND ART

Laminated glass is less likely to scatter even when fractured by external impact and can be safely used. Due to this advantage, laminated glass has been widely used, for example, in windowpanes of vehicles (e.g., automobiles), aircraft, and buildings. An exemplary laminated glass includes at least a pair of glass plates integrated through, for example, an interlayer film for a laminated glass containing a polyvinyl acetal resin (e.g., polyvinyl butyral resin) plasticized with a plasticizer.

Recent interlayer films for a laminated glass have been required to have various properties, such as heat insulation properties and sound insulation properties. To satisfy such requirements, interlayer films for a laminated glass having a laminated structure have been proposed, in which layers capable of exhibiting various properties are stacked. For example, Patent Literature 1 discloses an interlayer film for a laminated glass having excellent heat insulation properties, wherein the interlayer film includes a sheet containing air bubbles of a specific average size at a specific density. Patent Literature 2 discloses an interlayer film for a laminated glass having excellent heat-shielding properties, wherein the interlayer film includes a heat-shielding layer containing heat-shielding particles. Patent Literature 3 discloses an interlayer film for a laminated glass having excellent sound insulation properties, wherein the interlayer film includes a sound insulating layer containing a large amount of a plasticizer. Patent Literature 4 discloses an interlayer film for a laminated glass having excellent shock resistance, wherein the interlayer film includes a plastic layer having a high Young's modulus. When attempting to satisfy many properties at the same time, however, many layers corresponding to the properties are required, complicating the structure of the interlayer film for a laminated glass. In addition, the layers may cancel each other's effect depending on the combination of the layers, failing to achieve desired properties.

### CITATION LIST

### - Patent Literature

Patent Literature 1: JP 2010-100778 A
Patent Literature 2: JP 2016-193826 A
Patent Literature 3: JP H05-138840 A
Patent Literature 4: JP 2016-166130 A

### SUMMARY OF INVENTION

### - Technical problem

The present invention aims to provide a heat insulation sheet having excellent heat insulation properties, and an interlayer film for a laminated glass and a laminated glass each including the heat insulation sheet.

### - Solution to problem

The present invention relates to a heat insulation sheet including: a laminate including an aerogel layer containing an aerogel and a resin layer containing a thermoplastic resin, the resin layer being stacked on at least one surface of the aerogel layer.

The present invention is described in detail below.

Aerogel is a porous material obtained by replacing the solvent contained in a gel with a gas by super supercritical drying or the like. In recent years, silica aerogel and other various aerogels, such as carbon aerogel, polymer aerogel, and organic-inorganic hybrid aerogel, have been known. The present inventors made intensive studies to find out that a sheet obtained by stacking a resin layer containing a thermoplastic resin on an aerogel layer containing an aerogel can exhibit excellent heat insulation properties. The inventors found out that the heat insulation sheet can exhibit very high heat insulation properties especially when a laminated glass is produced using the heat insulation sheet as an interlayer film for a laminated glass. The inventors thus completed the present invention.

The very high heat insulation properties are presumably attributed not only to the excellent heat insulation properties of the porous aerogel itself, but also to the following reasons: in production of a laminated glass using the heat insulation sheet of the present invention as an interlayer film for a laminated glass, the high-temperature, high-pressure conditions in an autoclave step allow more solvent in the aerogel than usual to evaporate, resulting in an aerogel having more voids; and the aerogel, as used in a laminated glass, is less likely to absorb moisture, so that the aerogel can maintain the state with more voids, and thus is particularly less likely to conduct heat or transmit sound. When the aerogel alone is put under high-temperature, high-pressure conditions as in an autoclave, it is very difficult to perform the same treatment as in production of a laminated glass because leaving the aerogel to stand is difficult due to its lightness.

The heat insulation sheet of the present invention includes a laminate including an aerogel layer and a resin layer.

The aerogel layer contains an aerogel and thus can exhibit high heat insulation properties. The heat insulation sheet of the present invention can exhibit particularly excellent heat insulation properties especially when a laminated glass is produced using the heat insulation sheet of the present invention as an interlayer film for a laminated glass.

The aerogel is a porous material obtained by replacing the solvent contained in a gel with a gas by super supercritical drying, evaporation drying, freeze-drying, or the like.

The aerogel is not particularly limited. For example, the aerogel may be a conventionally known aerogel such as a polymer aerogel, a silica aerogel, a carbon aerogel, an alumina aerogel, or an organic-inorganic hybrid aerogel. In particular, the aerogel is suitably a polymer aerogel because it has high flexibility that makes it possible to achieve the tensile strain at break described later.

The polymer aerogel is an aerogel produced by preparing a gel containing an organic polymer material and then removing the solvent by supercritical drying, evaporation drying, freeze-drying, or the like.

The organic polymer material constituting the polymer aerogel is not particularly limited. For achieving an aerogel having a particularly high flexibility, the organic polymer is suitably at least one organic polymer material selected from the group consisting of resorcinol-formalin resins, cellulose nanofibers, polyimides, polyurethanes, epoxy resins, polyacrylates, acrylate oligomers, polymethylmethacrylates, polyoxyalkylenes, polybutadienes, polyethers, and chitosans.

The organic-inorganic hybrid aerogel is an aerogel constituted by organic matter and inorganic matter.

The silica aerogels and alumina aerogels are classified as inorganic aerogels, but some of them are classified as organic-inorganic hybrid aerogels. For example, silica aerogels as inorganic aerogels do not contain an organic group between two Si atoms. In contrast, silica aerogels as organic-inorganic hybrid aerogels contain an organic group between two Si atoms. From the viewpoint of obtaining an aerogel exhibiting high flexibility, silica aerogels as organic-inorganic hybrid aerogels are suitable. Whether the silica aerogel is an inorganic silica aerogel or an organic-inorganic hybrid silica aerogel can be determined by NMR analysis, for example.

The aerogel layer may contain, in addition to the aerogel, additives such as an antioxidant, an ultraviolet absorber, a light stabilizer, a flame retardant, a dye, a pigment, a plasticizer, an antistatic agent, inorganic particles, a fluorescent agent, a heat-ray absorbent, a heat-ray reflecting agent, modified silicone oil as an adhesion modifier, a moisture-proof agent, and an anti-blocking agent. The aerogel layer may be coated with a thermosetting material.

Here, for further improvement of the anisotropic heating properties and the transparency, the aerogel layer preferably consists only of an aerogel or has an aerogel content of 80% by weight or more.

The thickness of the aerogel layer is not particularly limited. The lower limit thereof is preferably 10 µm and the upper limit thereof is preferably 30 mm. The aerogel layer having a thickness of 10 µm or more can exhibit high heat insulation properties. The aerogel layer having a thickness of 30 mm or less improves the handleability in bending processing along a curved surface or in winding into a roll. The lower limit of the thickness of the aerogel layer is more preferably 50 µm and the upper limit thereof is more preferably 15 mm. The lower limit is still more preferably 90 µm and the upper limit is still more preferably 3 mm. The upper limit is particularly preferably 1.5 mm, most preferably 800 µm.

In particular, when the thickness of the aerogel layer is 3 mm or less, not only the handleability is simply improved, but also the effect of preventing aerogel breakage is further enhanced. In addition, the formation of wrinkles or fold marks in the aerogel layer can be further suppressed. As the thickness of the aerogel layer is reduced to 2.0 mm or less, 1.5 mm or less, 800 µm or less, and 500 µm or less, the effect of preventing aerogel breakage and the effect of preventing wrinkles or fold marks are increased.

The resin layer serves to improve the handleability of the heat insulation sheet of the present invention, as well as to improve adhesiveness to glass and meet basic properties required for an interlayer film layer for a laminated glass, such as penetration resistance, when the heat insulation sheet is used as an interlayer film for a laminated glass.

The resin layer is stacked on at least one surface, preferably on both surfaces, of the aerogel layer (hereinafter, when the resin layers are provided on both surfaces, one of them may also be referred to as a "first resin layer" and the other may also be referred to as a "second resin layer").

The first resin layer and the second resin layer may be the same as or different from each other.

For improved transparency of the resulting heat insulation sheet, the resin layer is preferably neither a foamed body nor a porous body. In other words, the resin layer is preferably a non-foamed body or a non-porous body.

The lower limit of the glass transition temperature (Tg) of the resin layer determined by measurement of dynamic viscoelasticity by the following method is preferably -10°C, and the upper limit thereof is preferably 80°C. Specifically, the resin layer is press-molded with a press molding machine into a measurement target having an average thickness of 0.35 mm. The obtained measurement target is left to stand under the conditions of 25°C and a relative humidity of 30% for two hours. The viscoelasticity is measured using, for example, "ARES-G2" available from TA Instruments. The measurement is performed using parallel plates having a diameter of 8 mm as fixtures under the conditions of a temperature decrease from 100°C to -10°C at a temperature decrease rate of 3°C/min, a frequency of 1 Hz, and a strain of 1%. The loss tangent peak temperature in the measurement results is taken as the glass transition temperature Tg (°C).

With the Tg of the resin layer within this range, the resulting heat insulation sheet of the present invention has excellent flexibility and can be easily bent along a curved surface or wound into a roll to improve the handleability. The lower limit of the Tg of the resin layer is more preferably -5°C, and the upper limit thereof is more preferably 65°C.

In the case where the glass transition temperature of the resin layer is measured after the heat insulation sheet is produced, the measurement target may be obtained by the following method. The heat insulation sheet is stored at a temperature of 23°C and a humidity of 30% for one month. The aerogel layer and the resin layer are then peeled from each other, and the peeled resin layer is press-molded with a press molding machine into a measurement target having an average thickness of 0.35 mm.

Examples of the thermoplastic resin contained in the resin layer include polyvinylidene fluoride, polytetrafluoroethylene, vinylidene fluoride-propylene hexafluoride copolymers, polytrifluoroethylene, and acrylonitrile-butadiene-styrene copolymers. Examples also include polyesters, polyethers, polyamides, polycarbonates, polyacrylates, and polymethacrylates. Examples also include polyvinyl chloride, polyethylene, polypropylene, polystyrene, polyvinyl acetal, ethylene-vinyl acetate copolymers, polyoxymethylene (or polyacetal) resins, acetoacetal resins, polyvinyl benzyl acetal resins, polyvinyl cumine acetal resins, ionomer resins, and cycloolefins. In particular, the resin layer contains preferably a polyvinyl acetal or ethylene-vinyl acetate copolymer, more preferably a polyvinyl acetal.

The polyvinyl acetal is not particularly limited as long as it is obtainable by acetalization of polyvinyl alcohol with an aldehyde. Preferred is polyvinyl butyral. Two or more types of polyvinyl acetal may be used in combination as needed.

The lower limit of the degree of acetalization of the polyvinyl acetal is preferably 40 mol% and the upper limit thereof is preferably 85 mol%. The lower limit is more preferably 60 mol% and the upper limit is more preferably 75 mol%.

The lower limit of the hydroxy group content of the polyvinyl acetal is preferably 15 mol% and the upper limit thereof is preferably 40 mol%. With the hydroxy group content of 15 mol% or more, the adhesiveness between the interlayer film for a laminated glass and glass is improved. With the hydroxy group content of 40 mol% or less, the handleability of the interlayer film for a laminated glass is improved.

The degree of acetalization and the hydroxy group content can be measured in conformity with JIS K6728 "Testing methods for polyvinyl butyral".

The polyvinyl acetal can be prepared by acetalization of polyvinyl alcohol with an aldehyde.

The polyvinyl alcohol can be commonly prepared by saponification of polyvinyl acetate. Polyvinyl alcohol having a degree of saponification of 70 to 99.9 mol% is typically used. The degree of saponification of the polyvinyl alcohol is preferably 80 to 99.9 mol%.

The lower limit of the degree of polymerization of the polyvinyl alcohol is preferably 500 and the upper limit thereof is preferably 4,000. When the degree of polymerization of the polyvinyl alcohol is 500 or more, the laminated glass to be obtained has higher penetration resistance. When the degree of polymerization of the polyvinyl alcohol is 4,000 or less, molding of the interlayer film for a laminated glass is facilitated. The lower limit of the degree of polymerization of the polyvinyl alcohol is more preferably 1,000 and the upper limit thereof is more preferably 3,600.

The aldehyde is not particularly limited. Commonly, a C1-C10 aldehyde is suitably used. The C1-C10 aldehyde is not particularly limited, and examples thereof include n-butyraldehyde and isobutyraldehyde. Examples also include n-valeraldehyde, 2-ethylbutyraldehyde, n-hexylaldehyde, n-octylaldehyde, n-nonylaldehyde, n-decylaldehyde, formaldehyde, acetaldehyde, benzaldehyde, polyvinyl benzylaldehyde, and polyvinyl cuminaldehyde. In particular, n-butyraldehyde, n-hexylaldehyde, and n-valeraldehyde are preferred, and n-butyraldehyde is more preferred. Each of these aldehydes may be used alone, or two or more thereof may be used in combination.

The resin layer preferably contains a plasticizer. The plasticizer is not particularly limited, and examples thereof include organic ester plasticizers such as monobasic organic acid esters and polybasic organic acid esters, and phosphoric acid plasticizers such as organophosphate plasticizers and organophosphite plasticizers. The plasticizer is preferably a liquid plasticizer.

The monobasic organic acid esters are not particularly limited, and examples thereof include glycol esters obtained by a reaction between a glycol and a monobasic organic acid.

Examples of the glycol include triethylene glycol, tetraethylene glycol, and tripropylene glycol. Examples of the monobasic organic acid include butyric acid, isobutyric acid, caproic acid, 2-ethylbutyric acid, heptylic acid, n-octylic acid, 2-ethylhexylic acid, pelargonic acid (or n-nonylic acid), and decylic acid.

In particular, preferred are triethylene glycol dicaproic acid ester, triethylene glycol-di-2-ethylbutyric acid ester, triethylene glycol-di-n-octylic acid ester, and triethylene glycol-di-2-ethylhexylic acid ester.

The polybasic organic acid esters are not particularly limited, and examples thereof include ester compounds of a polybasic organic acid (e.g., adipic acid, sebacic acid, and azelaic acid) and a C4-C8 linear or branched alcohol. In particular, preferred are dibutyl sebacic acid ester, dioctyl azelaic acid ester, and dibutyl carbitol adipic acid ester.

The organic ester plasticizers are not particularly limited, and examples thereof include triethylene glycol di-2-ethylbutyrate, triethylene glycol di-2-ethylhexanoate, triethylene glycol dicaprylate, triethylene glycol di-n-octanoate, and triethylene glycol di-n-heptanoate. Examples also include tetraethylene glycol di-n-heptanoate, tetraethylene glycol di-2-ethylhexanoate, dibutyl sebacate, dioctyl azelate, dibutyl carbitol adipate, ethylene glycol di-2-ethylbutyrate, and 1,3-propylene glycol di-2-ethylbutyrate. Examples also include 1,4-butylene glycol di-2-ethylbutyrate, diethylene glycol di-2-ethylbutyrate, diethylene glycol di-2-ethylhexanoate, and dipropylene glycol di-2-ethylbutyrate. Examples also include triethylene glycol di-2-ethylpentanoate, tetraethylene glycol di-2-ethylbutyrate, and diethylene glycol dicaprylate. Examples also include dihexyl adipate, dioctyl adipate, hexylcyclohexyl adipate, diisononyl adipate, heptylnonyl adipate, dibutyl sebacate, and oil-modified sebacic alkyds. Examples further include mixtures of phosphoric acid esters and adipic acid esters, adipic acid esters, mixed type adipic acid esters prepared from C4-C9 alkyl alcohols and C4-C9 cyclic alcohols, and C6-C8 adipic acid esters such as hexyl adipate.

The organophosphate plasticizer is not particularly limited, and examples thereof include tributoxyethyl phosphate, isodecylphenyl phosphate, and triisopropyl phosphate.

For less hydrolysis, the plasticizer contains preferably triethylene glycol di-2-ethylhexanoate (3GO), triethylene glycol di-2-ethylbutyrate (3GH), tetraethylene glycol di-2-ethylhexanoate (4GO), or dihexyl adipate (DHA), more preferably tetraethylene glycol di-2-ethylhexanoate (4GO) or triethylene glycol di-2-ethylhexanoate (3GO), still more preferably triethylene glycol di-2-ethylhexanoate.

The amount of the plasticizer in the resin layer is not particularly limited. The lower limit thereof is preferably 10 parts by weight and the upper limit thereof is preferably 90 parts by weight based on 100 parts by weight of the polyvinyl acetal. When the amount of the plasticizer is 10 parts by weight or more, the interlayer film for a laminated glass has a low melt viscosity, improving the deaeration properties in the production of a laminated glass using it as an interlayer film for a laminated glass. When the amount of the plasticizer is 90 parts by weight or less, the transparency of the interlayer film for a laminated glass is improved. The lower limit of the amount of the plasticizer is more preferably 25 parts by weight and the upper limit thereof is more preferably 80 parts by weight, still more preferably 70 parts by weight.

When the amount of the plasticizer is 55 parts by weight or more, excellent sound insulation properties can be imparted to the resin layer.

The amount of the plasticizer in the first resin layer and the amount of the plasticizer in the second resin layer may be the same as or different from each other.

The resin layer preferably contains an adhesion modifier. The adhesion modifier contained adjusts the adhesion force to glass, resulting in production of a laminated glass excellent in penetration resistance.

The adhesion modifier used is suitably, for example, at least one selected from the group consisting of an alkali metal salt, an alkaline earth metal salt, and a magnesium salt. Examples of the adhesion modifier include salts of potassium, sodium, magnesium, and the like.

Examples of an acid constituting the salts include organic acids such as carboxylic acids (e.g., octylic acid, hexylic acid, 2-ethylbutyric acid, butyric acid, acetic acid, formic acid) and inorganic acids such as hydrochloric acid and nitric acid.

In the case where the heat insulation sheet of the present invention is required to have heat ray-absorbing properties, the resin layer may contain a heat-ray absorbent.

The heat-ray absorbent is not particularly limited as long as it can block infrared rays. Specifically, for example, preferred is at least one selected from the group consisting of tin-doped indium oxide (ITO) particles, antimony-doped tin oxide (ATO) particles, aluminum-doped zinc oxide (AZO) particles, indium-doped zinc oxide (IZO) particles, tin-doped zinc oxide particles, silicon-doped zinc oxide particles, lanthanum hexaboride particles, and cerium hexaboride particles.

The resin layer may contain conventionally known additives such as a UV blocking agent, an antioxidant, a light stabilizer, modified silicone oil as an adhesion modifier, a flame retardant, an antistatic agent, a moisture-proof agent, a heat-ray reflecting agent, a heat-ray absorbent, an anti-blocking agent, and a colorant containing a pigment or dye, as needed.

The thickness of the resin layer is not particularly limited. The lower limit thereof is preferably 10 µm and the upper limit thereof is preferably 3,500 µm. With the thickness of the resin layer within this range, sufficient durability can be achieved and the laminated glass to be obtained has satisfactory basic properties such as transparency and penetration resistance. The lower limit of the thickness of the resin layer is more preferably 100 µm and the upper limit thereof is more preferably 1,200 µm. The lower limit is still more preferably 200 µm and the upper limit is still more preferably 850 µm. The lower limit is particularly preferably 350 µm.

The heat insulation sheet of the present invention may be produced by any method. Suitable methods include a method including stacking the first resin layer, the aerogel layer, and the second resin layer in the stated order to provide a laminate, and thermally pressure bonding the laminate. In particular, a what is called roll-to-roll method is preferred in which the layers are unwounded from rolls prepared by individually winding the layers and stacked to provide a laminate, the laminate is thermally pressure bonded by being passed between heated press rolls to provide an heat insulation sheet, and the heat insulation sheet is wound into a roll.

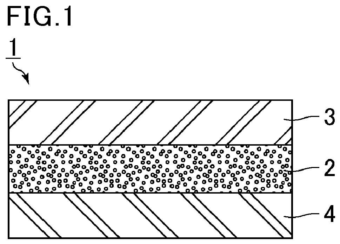

Fig. 1 is a schematic view showing an exemplary cross section in the thickness direction of the heat insulation sheet of the present invention.

In Fig. 1, a heat insulation sheet 1 includes an aerogel layer 2, a first resin layer 3 stacked on one surface of the aerogel layer 2, and a second resin layer 4 stacked on the other surface.

The heat insulation sheet of the present invention has the above structure and thus can exhibit excellent heat insulation properties. The heat insulation sheet thus can be used alone in applications such as curtain linings, curtain liners, heat insulation sheet for attaching to glass, flooring materials, adhesive sheets for wallpaper, adhesive sheets for ceiling wallpaper, and vehicle interior materials.

The heat insulation sheet of the present invention can exhibit particularly high heat insulation properties when a laminated glass is produced using the heat insulation sheet as an interlayer film for a laminated glass. This is presumably attributed to the following reasons: in production of a laminated glass using the heat insulation sheet of the present invention as an interlayer film for a laminated glass, the high-temperature, high-pressure conditions in an autoclave step allow more solvent in the aerogel than usual to evaporate, resulting in an aerogel having more voids; and the aerogel, as used in a laminated glass, is less likely to absorb moisture, and thus can maintain the state with more voids.

The present invention also encompasses an interlayer film for a laminated glass including the heat insulation sheet of the present invention.

The interlayer film for a laminated glass of the present invention may have a wedge-shaped cross section. In the case where the interlayer film for a laminated glass has a wedge-shaped cross section, adjustment of the wedge angle θ of the wedge shape according to the mounting angle of the laminated glass can prevent occurrence of double images or ghost images in a head-up display which allows the driver to see the front visual field and the meter image at the same time without turning the driver's eyes downward. For further preventing occurrence of double images, the lower limit of the wedge angle θ is preferably 0.1 mrad, more preferably 0.2 mrad, still more preferably 0.3 mrad and the upper limit is preferably 1 mrad, more preferably 0.9 mrad.

The wedge shape herein includes the shape of an interlayer film for a laminated glass having a wedge-shaped cross section produced by extrusion-molding a resin composition using an extruder. Specifically, the wedge shape may have its minimum thickness in a region slightly inward from one end on the thinner side (specifically, a region spaced inward from one end on the thinner side by a distance of 0X to 0.2X where X is the distance between the one end and the other end). The wedge shape may also have its maximum thickness in a region slightly inward from one end on the thicker side (specifically, a region spaced inward from one end on the thicker side by a distance of 0X to 0.2X where X is the distance between the one end and the other end). The wedge shape as used herein includes such a shape. The distance X between the one end and the other end of the interlayer film for a laminated glass is preferably 3 m or shorter, more preferably 2 m or shorter, particularly preferably 1.5 m or shorter and is preferably 0.5 m or longer, more preferably 0.8 m or longer, particularly preferably 1 m or longer.

In the case where the interlayer film for a laminated glass of the present invention has a wedge-shaped cross section, for example, the cross-sectional shape of the entire interlayer film for a laminated glass can be controlled to have a wedge shape with a certain wedge angle by controlling the shape of the first resin layer and/or the second resin layer while keeping the thickness of the aerogel layer within a certain range.

The present invention also encompasses a laminated glass including a pair of glass plates and the interlayer film for a laminated glass of the present invention interposed between the pair of glass plates.

The glass plates may be commonly used transparent glass plates. Examples thereof include inorganic glass plates such as float glass plates, polished glass plates, figured glass plates, meshed glass plates, wired glass plates, colored glass plates, heat-absorbing glass plates, heat-reflecting glass plates, and green glass plates. A UV-blocking glass plate having a UV-blocking layer on a glass surface may also be used. Other examples of the glass plates include organic plastic plates made of polyethylene terephthalate, polycarbonate, polyacrylate, or the like.

The glass plates may include two or more types of glass plates. For example, the laminated glass may be a laminated glass including the interlayer film for a laminated glass of the present invention between a transparent float glass plate and a colored glass plate such as a green glass plate. The glass plates may include two or more glass plates with different thicknesses.

The laminated glass of the present invention may be produced by any method, and may be produced by a conventionally known method. Specifically, for example, a laminate including at least two glass plates and an interlayer film for a laminated glass interposed between the two glass plates is passed through nip rolls to be squeezed (squeeze deaeration) or put in a rubber bag and vacuum suctioned (vacuum deaeration) to be pressure-bonded while the air remaining between the glass plates and the interlayer film is removed. The resulting laminate is pressurized with heat, for example, in an autoclave to be pressure-bonded. In particular, vacuum deaeration is preferred for production of the laminated glass of the present invention. Vacuum deaeration substantially evacuates many voids in the aerogel layer and thus is considered to improve the heat insulation properties.

### - Advantageous Effects of Invention

The present invention can provide a heat insulation sheet having excellent heat insulation properties, and an interlayer film for a laminated glass and a laminated glass each including the heat insulation sheet.

### BRIEF DESCRIPTION OF DRAWINGS

Fig. 1 is a schematic view showing an exemplary cross section in the thickness direction of the heat insulation sheet of the present invention.

### DESCRIPTION OF EMBODIMENTS

Embodiments of the present invention are specifically described in the following with reference to, but not limited to, examples.

### (Example 1)

### (1) Preparation of aerogel layer

TEMPO-oxidized cellulose nanofibers were dispersed in pure water to prepare a 0.9% by weight dispersion of the TEMPO-oxidized cellulose nanofibers. To 20 mL of the dispersion was dripped 10 mL of 0.1 M hydrochloric acid. The dispersion was then left to stand at room temperature for one hour to give a hydrogel. The obtained hydrogel was freeze-dried to give a 300-µm-thick aerogel layer containing a polymer aerogel containing cellulose nanofibers.

### (2) Preparation of resin layer

To 100 parts by weight of polyvinyl butyral were added 60 parts by weight of a plasticizer, 0.5 parts by weight of a UV blocking agent, and 0.5 parts by weight of an antioxidant. They were sufficiently kneaded with a mixing roll to prepare a composition. The obtained composition was extruded from an extruder to give a single-layer resin layer having a thickness of 380 µm.

The polyvinyl butyral had a hydroxy group content of 30 mol%, a degree of acetylation of 1 mol%, a degree of butyralization of 69 mol%, and an average degree of polymerization of 1,700. The plasticizer used was triethylene glycol di-2-ethylhexanoate (3GO). The UV blocking agent used was 2-(2'-hydroxy-3'-t-butyl-5-methylphenyl)-5-chlorobenzotriazole ("Tinuvin 326" available from BASF SE). The antioxidant used was 2,6-dit-butyl-p-cresol (BHT).

The resin layer was press-molded with a press molding machine into a measurement target having an average thickness of 0.35 mm. The obtained measurement target was left to stand under the conditions of 25°C and a relative humidity of 30% for two hours. The viscoelasticity was measured using "ARES-G2" available from TA Instruments. The measurement was performed using parallel plates having a diameter of 8 mm as fixtures under the conditions of a temperature decrease from 100°C to -10°C at a temperature decrease rate of 3°C/min, a frequency of 1 Hz, and a strain of 1%. The loss tangent peak temperature 30°C in the measurement results was taken as the glass transition temperature Tg.

### (3) Production of heat insulation sheet

Two sheets of the obtained resin layer were provided, and the aerogel layer was interposed between the two sheets. The laminate was thermally pressure bonded to produce a heat insulation sheet having a laminated structure (first resin layer/aerogel layer/second resin layer). The thermal pressure bonding was performed using a thermal pressure bonding laminator ("MRK-650Y type" available from MCK Co., Ltd.) under the conditions of a heating temperature of 90°C and a linear pressure in pressure bonding of 0.05 kN. The laminating rolls used for the thermal pressure bonding had upper and lower rolls both formed of rubber.

### (4) Production of laminated glass

The obtained heat insulation sheet was used as an interlayer film for a laminated glass. A glass plate (2.5 mm in thickness), the interlayer film for a laminated glass, and a glass plate (2.5 mm in thickness) were stacked in the stated order to give a laminate. The obtained laminate was put in a rubber bag and vacuum suctioned so that the laminate was temporarily pressure-bonded while the air remaining between the glass plates and the interlayer film was removed. Subsequently, the temporarily pressure-bonded laminate was pressure-bonded in an autoclave for 20 minutes under the conditions of 150°C and a pressure of 1.01 MPa. Thus, a laminated glass was produced.

### (Example 2)

In 10 g of a 0.01 M acetic acid solution were dissolved 0.5 g of urea and 1.0 g of a surfactant (hexadecyltrimethylammonium bromide). With stirring at room temperature, 5.0 mL of silica alkoxide (methyltrimethoxysilane: MTMS) was added. To allow hydrolysis to proceed, stirring was continued for 30 minutes. Thereafter, the solution was left to stand in a 60°C thermostat to allow gelation to occur for 96 hours under sealed conditions. At this time, the height of the stirred liquid was adjusted such that the dried gel had a thickness of 0.5 mm. The gel was then washed with methanol at a frequency of three times/day for at least three days to remove unreacted matter and the surfactant, and the methanol was replaced with a low surface tension solvent (dihydrodecafluoropentane) at a frequency of four times/day for at least four days. Finally, the gel was dried under normal pressure at 35°C for three days to give a 500-µm-thick aerogel layer.

A heat insulation sheet and a laminated glass were obtained as in Example 1 except that the obtained aerogel layer was used.

### (Example 3)

An amount of 1 g of Chitosan 10 (available from Wako Pure Chemical Industries, Ltd.) was dissolved in 50 mL of a 2% by volume aqueous acetic acid solution to prepare a chitosan solution. The chitosan solution was diluted in ultrapure water to a 10 g/L solution. To the 10 g/L aqueous chitosan solution was added 1.5 mL of a 9% by weight aqueous butyraldehyde solution. The solution was transferred into a petri dish. The petri dish was sealed and left to stand at 60°C for 12 hours to prepare a hydrogel. After slow cooling at room temperature, the hydrogel was washed by repeating five-hour immersion in ultrapure water five times, and washed by immersing the aerogel in methanol at a frequency of three times/day for three days. The obtained gel was dried at room temperature to give a 300-µm-thick aerogel layer containing a polymer aerogel containing chitosan.

A heat insulation sheet and a laminated glass were obtained as in Example 1 except that the obtained aerogel layer was used.

### (Example 4)

A resin layer was prepared as in Example 1 except that the amount of the plasticizer was changed to 40 parts by weight.

In 50 g of a 0.01 M acetic acid solution were dissolved 2.5 g of urea and 5.0 g of a surfactant (hexadecyltrimethylammonium bromide). With stirring at room temperature, 25.0 mL of silica alkoxide (methyltrimethoxysilane: MTMS) was added. To allow hydrolysis to proceed, stirring was continued for 30 minutes. Thereafter, the solution was left to stand in a 60°C thermostat to allow gelation to occur for 96 hours under sealed conditions. The height of the stirred liquid was adjusted such that the dried gel had a thickness of 2 mm. The gel was then washed with methanol at a frequency of three times/day for at least three days to remove unreacted matter and the surfactant, and the methanol was replaced with a low surface tension solvent (dihydrodecafluoropentane) at a frequency of four times/day for at least four days. Finally, the gel was dried under normal pressure at 35°C for three days to give a 2,000-µm-thick aerogel layer.

A heat insulation sheet and a laminated glass were obtained as in Example 2 except that the obtained resin layer and aerogel layer were used.

### (Example 5)

A heat insulation sheet and a laminated glass were obtained as in Example 3 except that a resin layer obtained as in Example 4 was used.

### (Example 6)

A resin layer was prepared as in Example 4.

In 200 g of a 0.01 M acetic acid solution were dissolved 10.0 g of urea and 20.0 g of a surfactant (hexadecyltrimethylammonium bromide). With stirring at room temperature, 100 mL of silica alkoxide (methyltrimethoxysilane: MTMS) was added. To allow hydrolysis to proceed, stirring was continued for 30 minutes. Thereafter, the solution was left to stand in a 60°C thermostat to allow gelation to occur for 96 hours under sealed conditions. The height of the stirred liquid was adjusted such that the dried gel had a thickness of 8 mm. The gel was then washed with methanol at a frequency of three times/day for at least three days to remove unreacted matter and the surfactant, and the methanol was replaced with a low surface tension solvent (dihydrodecafluoropentane) at a frequency of four times/day for at least four days. Finally, the gel was dried by supercritical drying with carbon dioxide to give an 8,000-µm-thick aerogel layer.

A heat insulation sheet and a laminated glass were obtained as in Example 2 except that the obtained resin layer and aerogel layer were used.

### (Example 7)

To 100 parts by weight of an ethylene-vinyl acetate copolymer resin (EVA, vinyl acetate content: 30% by mass) were added 0.5 parts by weight of a UV blocking agent and 0.5 parts by weight of an antioxidant. They were sufficiently kneaded with a mixing roll to prepare a composition. The obtained composition was extruded from an extruder to give a single-layer resin layer having a thickness of 380 µm.

In 80 g of a 0.01 M acetic acid solution were dissolved 4.0 g of urea and 8.0 g of a surfactant (hexadecyltrimethylammonium bromide). With stirring at room temperature, 40.0 mL of silica alkoxide (methyltrimethoxysilane: MTMS) was added. To allow hydrolysis to proceed, stirring was continued for 30 minutes. Thereafter, the solution was left to stand in a 60°C thermostat to allow gelation to occur for 96 hours under sealed conditions. The height of the stirred liquid was adjusted such that the dried gel had a thickness of 3 mm. The gel was then washed with methanol at a frequency of three times/day for at least three days to remove unreacted matter and the surfactant, and the methanol was replaced with a low surface tension solvent (dihydrodecafluoropentane) at a frequency of four times/day for at least four days. Finally, the gel was dried under normal pressure at 35°C for three days to give a 3,000-µm-thick aerogel layer.

A heat insulation sheet and a laminated glass were obtained as in Example 2 except that the obtained resin layer and aerogel layer were used.

### (Example 8)

A heat insulation sheet and a laminated glass were obtained as in Example 7 except that ionomer (available from Dupont-Mitsui Polychemicals Co., Ltd, Himilan PV5300) was used instead of the ethylene-vinyl acetate copolymer resin (EVA, vinyl acetate content: 30% by mass).

### (Example 9)

A resin layer was prepared as in Example 1 except that the amount of the plasticizer was changed to 10 parts by weight.

An aerogel layer was prepared as in Example 7.

A heat insulation sheet and a laminated glass were obtained as in Example 2 except that the obtained resin layer and aerogel layer were used.

### (Example 10)

A resin layer was prepared as in Example 1 except that the type of the plasticizer was changed from triethylene glycol di-2-ethylhexanoate (3GO) to triethylene glycol di-2-ethylbutyrate (3GH) and the amount of the plasticizer was changed from 60 parts by weight to 30 parts by weight.

An aerogel layer was prepared as in Example 7.

A heat insulation sheet and a laminated glass were obtained as in Example 2 except that the obtained resin layer and aerogel layer were used.

### (Comparative Example 1)

A single-layer resin layer having a thickness of 300 µm was prepared in the substantially same manner as in Example 1. The obtained resin layer having a thickness of 300 µm was interposed between two resin films, each having a thickness of 380 µm and prepared as in Example 1. They were thermally pressure bonded to produce an interlayer film for a laminated glass. The thermal pressure bonding was performed using a thermal pressure bonding laminator ("MRK-650Y type" available from MCK Co., Ltd.) under the conditions of a heating temperature of 90°C and a pressure in pressure bonding of 0.05 kN. The laminating rolls used for the thermal pressure bonding had upper and lower rolls both formed of rubber.

A glass plate (2.5 mm in thickness), the obtained interlayer film for a laminated glass, and a glass plate (2.5 mm in thickness) were stacked in the stated order to give a laminate. The obtained laminate was put in a rubber bag and the pressure inside the bag was reduced to 0.1 MPa. Then, the laminate was held at 90°C for five minutes to be temporarily pressure-bonded while the air remaining between the glass plates and the interlayer film was removed. Subsequently, the temporarily pressure-bonded laminate was pressure-bonded in an autoclave for 20 minutes under the conditions of 150°C and a pressure of 1.01 MPa. Thus, a laminated glass was produced.

### (Comparative Example 2)

A heat insulation sheet and a laminated glass were obtained as in Comparative Example 1 except that in preparation of the resin layer, the amount of the plasticizer was 40 parts by weight.

### (Comparative Example 3)

A laminated glass was obtained as in Example 1 using the aerogel layer obtained in Example 1 alone as a heat insulation sheet.

### (Comparative Example 4)

A laminated glass was obtained as in Example 1 using the aerogel layer obtained in Example 3 alone as a heat insulation sheet.

### (Comparative Example 5)

A laminated glass was obtained as in Example 1 using the aerogel layer obtained in Example 2 alone as a heat insulation sheet.

### (Evaluation)

The heat insulation sheets and laminated glasses obtained in the examples and comparative examples were evaluated by the following methods.

Tables 1 and 2 show the results.

### (1) Evaluation of handleability of heat insulation sheet

Each of the heat insulation sheets obtained in the examples and comparative examples was cut into a size of 3 cm in width and 30 cm in length to prepare a specimen. The obtained specimen was put on a horizontal table. The specimen was warped such that an angle of 30° was formed by the table and a straight line connecting the center in the thickness direction of one longitudinal end of the specimen and the center in the thickness direction of the other longitudinal end. The handleability was evaluated from the state of the heat insulation sheet at this time according to the following criteria.
○○ (Excellent): Neither the surface layers nor the aerogel broke, and no wrinkles or fold marks were formed.
○ (Good): Neither the surface layer nor the aerogel broke, but wrinkles or fold marks were formed.
Δ (Fair): Only the aerogel broke.
× (Poor): The surface layer and the aerogel broke.

### (2) Evaluation of shock resistance of heat insulation sheet

Each of the heat insulation sheets obtained in the examples and comparative examples was cut with a box cutter and sandpaper to a size of 25 mm square to prepare a specimen. Onto the obtained specimen was dropped a 9/16 SUS ball conforming to JIS B 1501:2009 vertically from a height of 20 cm. The shock resistance was evaluated according to the following criteria.
○ (Good): The heat insulation sheet did not chip.
× (Poor): The heat insulation sheet chipped.

### (3) Evaluation of penetration resistance of laminated glass

Each of the laminated glasses obtained in the examples and comparative examples was cut to a size of 15 cm square. When the aerogel layer prepared in the example or comparative example was not large enough, a larger aerogel layer was prepared by increasing the amount of the raw materials while keeping the mixing ratio of the raw materials and the thickness of the resulting aerogel layer unchanged.

The surface temperature of the laminated glass was adjusted to 23°C. Subsequently, a rigid sphere having a mass of 2,260 g and a diameter of 82 mm was dropped from a height of 1.5 m on the center of the laminated glass. Six sheets of the laminated glass were tested in the same manner. The laminated glass was rated "Passed" when all the six sheets of the laminated glass prevented the rigid sphere from penetrating therethrough within five seconds after the impact of the rigid sphere. The laminated glass was rated "Failed" when three or less sheets of the laminated glass prevented the rigid sphere from penetrating therethrough within five seconds after the impact of the rigid sphere.

When four sheets of the laminated glass prevented the rigid sphere from penetrating therethrough within five seconds after the impact of the rigid sphere, another six sheets of the laminated glass were tested again and the laminated glass was judged "Passed" or "Failed".

When five sheets of the laminated glass prevented the rigid sphere from penetrating therethrough within five seconds after the impact of the rigid sphere, another sheet of the laminated glass was tested. The laminated glass was rated "Passed" when the other sheet prevented the rigid sphere from penetrating therethrough within five seconds after the impact of the rigid sphere, or rated "Failed" when the sheet allowed the rigid sphere to penetrate therethrough within five seconds after the impact of the rigid sphere.

The same process was repeated incrementing, by 25 cm, the height from which the rigid sphere was dropped to the center of the sheet of the laminated glass.
○ (Good): The laminated glass was rated "Passed" even when the height was higher than 2 m.
× (Poor): The laminated glass was rated "Failed" when the height was 2 m or less.

### (4) Evaluation of heat insulation properties of laminated glass

Each of the laminated glasses obtained in the examples and comparative examples was cut to a size of 8 mm square with a glass cutter, a box cutter, and sandpaper, and left to stand on a 70°C hot plate. Five minutes later, the temperature of the laminated glass surface not in contact with the hot plate was measured using a contact-type thermometer. The heat insulation properties were evaluated according to the following criteria.
○ (Good): The surface temperature was lower than 54°C.
× (Poor): The surface temperature was 54°C or higher.

Heat insulation properties at higher temperature were also evaluated using a hot plate (available from MSA Factory Co., Ltd, PA8010-SC). Each of the laminated glasses obtained in the examples and comparative examples was cut to a size of 25 mm square with a glass cutter, a box cutter, and sandpaper to prepare a sample.

The sample was put on the hot plate under room temperature conditions before heating the hot plate. The hot plate was heated such that the hot plate reached 100°C after 10 minutes from the start of heating, reached 200°C after further 10 minutes, reached 250°C after further 10 minutes, and reached 300°C after further 20 minutes. The temperature of the laminated glass surface not in contact with the hot plate was measured. The heat insulation properties were evaluated according to the following criteria.
○○ (Excellent): The surface temperature was 110°C or lower.
○ (Good): The surface temperature was 110°C or higher and lower than 190°C.
× (Poor): The surface temperature was 190°C or higher.

**[Table 1]**

| | | | Example 1 | Example 2 | Example 3 | Example 4 | Example 5 | Example 6 |
|---|---|---|---|---|---|---|---|---|
| Interlayer film structure | First resin layer | Type of resin | PVB | PVB | PVB | PVB | PVB | PVB |
| | | Amount of resin | 100 | 100 | 100 | 100 | 100 | 100 |
| | | Type of plasticizer | 3GO | 3GO | 3GO | 3GO | 3GO | 3GO |
| | | Amount of plasticizer | 60 | 60 | 60 | 40 | 40 | 40 |
| | | Thickness (*µ* m) | 380 | 380 | 380 | 380 | 380 | 380 |
| | | Tg (° C) | 15.0 | 15.0 | 15.0 | 30.0 | 30.0 | 30.0 |
| | Aerogel layer | Type | Cellulose nanofibers | Silica | Chitosan | Silica | Chitosan | Silica |
| | | Thickness (*µ* m) | 300 | 500 | 300 | 2000 | 300 | 8000 |
| | Second resin layer | Type of resin | PVB | PVB | PVB | PVB | PVB | PVB |
| | | Amount of resin | 100 | 100 | 100 | 100 | 100 | 100 |
| | | Type of plasticizer | 3GO | 3GO | 3GO | 3GO | 3GO | 3GO |
| | | Amount of plasticizer | 60 | 60 | 60 | 40 | 40 | 40 |
| | | Thickness (*µ* m) | 380 | 380 | 380 | 380 | 380 | 380 |
| | | Tg (° C) | 15.0 | 15.0 | 15.0 | 30.0 | 30.0 | 30.0 |
| Evaluation | Heat insulation sheet | Handleability | ○○ | Δ | ○○ | Δ | ○○ | Δ |
| | | Shock resistance | ○ | ○ | ○ | ○ | ○ | ○ |
| | Laminated glass | Penetration resistance | ○ | ○ | ○ | ○ | ○ | ○ |
| | | Heat insulation properties (70° C) | ○ | ○ | ○ | ○ | ○ | ○ |
| | | Heat insulation properties (300° C) | × | ○ | × | ○○ | × | ○○ |

**[Table 2]**

| | | | Example 7 | Example 8 | Example 9 | Example 10 | Comparative Example 1 | Comparative Example 2 | Comparative Example 3 | Comparative Example 4 | Comparative Example 5 |
|---|---|---|---|---|---|---|---|---|---|---|---|
| Interlayer film structure | First resin layer | Type of resin | EVA | Ionomer | PVB | PVB | PVB | PVB | - | - | - |
| | | Amount of resin | 100 | 100 | 100 | 100 | 100 | 100 | - | - | - |
| | | Type of plasticizer | - | - | 3GO | 3GH | 3GO | 3GO | - | - | - |
| | | Amount of plasticizer | - | - | 10 | 30 | 60 | 40 | - | - | - |
| | | Thickness (µm) | 380 | 380 | 380 | 380 | 380 | 380 | - | - | - |
| | | Tg (°C) | - | 45,0 | 50,0 | 33,0 | 15,0 | 30,0 | - | - | - |
| | Aerogel layer | Type | Silica | Silica | Silica | Silica | (PVB) | (PVB) | Cellulose nanofibers | Chitosan | Silica |
| | | Thickness (µm) | 3000 | 3000 | 3000 | 3000 | 300 | 300 | 300 | 300 | 500 |
| | Second resin layer | Type of resin | EVA | Ionomer | PVB | PVB | PVB | PVB | - | - | - |
| | | Amount of resin | 100 | 100 | 100 | 100 | 100 | 100 | - | - | - |
| | | Type of plasticizer | - | - | 3GO | 3GH | 3GO | 3GO | - | - | - |
| | | Amount of plasticizer | - | - | 10 | 30 | 60 | 40 | - | - | - |
| | | Thickness (µm) | 380 | 380 | 380 | 380 | 380 | 380 | - | - | - |
| | | Tg (°C) | - | 45,0 | 50,0 | 33,0 | 15,0 | 15,0 | - | - | - |
| Evaluation | Heat insulation sheet | Handleability | Δ | Δ | Δ | Δ | ○○ | ○○ | ○ | ○ | Δ |
| | | Shock resistance | ○ | ○ | ○ | ○ | ○ | ○ | ○ | ○ | × |
| | Laminated glass | Penetration resistance | ○ | ○ | ○ | ○ | ○ | ○ | × | × | × |
| | | Heat insulation properties (70°C) | ○ | ○ | ○ | ○ | × | × | ○ | ○ | ○ |
| | | Heat insulation properties (30°C) | ○○ | ○○ | ○○ | ○○ | × | × | × | × | ○ |

### INDUSTRIAL APPLICABILITY

The present invention can provide a heat insulation sheet having excellent heat insulation properties, and an interlayer film for a laminated glass and a laminated glass each including the heat insulation sheet.

### REFERENCE SIGNS LIST

- 1: heat insulation sheet
- 2: aerogel layer
- 3: first resin layer
- 4: second resin layer

## Claims

1. A heat insulation sheet comprising:
a laminate including an aerogel layer containing an aerogel and a resin layer containing a thermoplastic resin, the resin layer being stacked on at least one surface of the aerogel layer.

2. The heat insulation sheet according to claim 1,
wherein the aerogel is a polymer aerogel.

3. The heat insulation sheet according to claim 2,
wherein the polymer aerogel contains at least one organic polymer material selected from the group consisting of resorcinol-formalin resins, cellulose nanofibers, polyimides, polyurethanes, and epoxy resins.

4. The heat insulation sheet according to claim 1, 2, or 3,
wherein the aerogel layer has a thickness of 3 mm or less.

5. The heat insulation sheet according to claim 1, 2, 3, or 4,
wherein the resin layer has a glass transition temperature (Tg) of -10°C or higher and 80°C or lower as determined by measurement of dynamic viscoelasticity.

6. The heat insulation sheet according to claim 1, 2, 3, 4, or 5,
wherein the resin layer is neither a foamed body nor a porous body.

7. The heat insulation sheet according to claim 1, 2, 3, 4, 5, or 6,
wherein the thermoplastic resin is a polyvinyl acetal or an ethylene-vinyl acetate copolymer.

8. An interlayer film for a laminated glass, the interlayer film comprising:
the heat insulation sheet according to claim 1, 2, 3, 4, 5, 6, or 7.

9. A laminated glass comprising:
a pair of glass plates; and
the interlayer film for a laminated glass according to claim 8 interposed between the pair of glass plates.
